# EUROPEAN PATENT APPLICATION

(11) **EP 4 202 789 A1**
(43) Date of publication of application: **28.06.2023**
(21) Application number: 22216072.3
(22) Date of filing: 22.12.2022
(51) Int. Cl.: G06N 5/022, G06N 5/04, G06F 40/30, G06Q 40/00

(54) **METHOD AND APPARATUS FOR EXTRACTING CAUSAL RELATIONSHIP, AND ELECTRONIC DEVICE**

(30) Priority: 23.12.2021 CN 202111592599
(71) Applicant: Beijing Baidu Netcom Science Technology Co., Ltd., Beijing 100085 (CN)
(72) Inventor: HUANG, Jiayan, Beijing, 100085 (CN)
(74) Representative: Isarpatent

(57) **Abstract**

A computer-implemented method includes: obtaining a text; inputting the text and a first question into a first machine reading comprehension model to obtain a first round of answer, wherein the first question inquires about cause of a causal relationship in the text, and the first round of answer includes at least one cause; and inputting the text and a second question into a second machine reading comprehension model to obtain a second round of answer, wherein the second question inquires about effect of the causal relationship in the text, and the second round of answer includes at least one effect of the at least one cause. Thus, the accuracy of causal relationship extraction is improved.

## Description

### TECHNICAL FIELD

The present disclosure relates to the technical field of artificial intelligence such as knowledge graphs and deep learning, and specifically to a method and an apparatus for extracting causal relationship, an electronic device, a non-transitory computer-readable storage medium and a computer program product.

### BACKGROUND

There is a large amount of causally related knowledge in an event graph, and digging a causal relationship between events is of great value to downstream applications such as event prediction and event reasoning.

At present, a mainstream method for extracting causal relationship is still a rule-based method. Causally related conjunctions such as "because", "result in" and "due to" are manually induced, then a rule template is constructed, and the rule template is used to dig <cause, effect> from texts.

Limitation of this method is that not all causal relationships are guided by causal conjunctions, nor do sentences containing causal conjunctions necessarily involve causal relationships, and rules are inexhaustible, so accuracy is relatively low when using the rule template to extract causal relationships.

### SUMMARY

The present disclosure provides a method and an apparatus for extracting causal relationship used for improving accuracy, an electronic device, a non-transitory computer-readable storage medium and a computer program product.

According to a first aspect of the present disclosure, a computer-implemented method for extracting causal relationship is provided, which includes: obtaining a text; inputting the text and a first question into a first machine reading comprehension model to obtain a first round of answer, wherein the first question inquires about cause of a causal relationship in the text, and the first round of answer includes at least one cause; and inputting the text and a second question into a second machine reading comprehension model to obtain a second round of answer, wherein the second question inquires about effect of the causal relationship in the text, and the second round of answer includes at least one effect of the at least one cause.

According to a second aspect of the present disclosure, an apparatus for extracting causal relationship is provided, which includes: an obtaining module, configured to obtain a text; a first extracting module, configured to input the text and a first question into a first machine reading comprehension model to obtain a first round of answer, wherein the first question inquires about cause of a causal relationship in the text, and the first round of answer comprises at least one cause; and a second extracting module, configured to input the text and a second question into a second machine reading comprehension model to obtain a second round of answer, wherein the second question inquires about effect of the causal relationship in the text, and the second round of answer comprises at least one effect of the at least one cause.

According to a third aspect of the present disclosure, an electronic device is provided, which includes: at least one processor; and a memory communicatively connected to the at least one processor, wherein the memory stores instructions executable by the at least one processor, wherein the instructions, when executed by the at least one processor, are configured to cause the at least one processor to implement the method described in the first aspect.

According to a fourth aspect of the present disclosure, a non-transitory computer-readable storage medium storing computer instructions is provided, where the computer instructions are configured to enable a computer to implement the method described in the first aspect.

According to a fifth aspect of the present disclosure, a computer program product is provided. The computer program product includes a computer program, wherein the computer program, when being executed by a processor, implements steps of the method described in the first aspect.

According to the technical solution of the present disclosure, the accuracy of causal relationship extraction is improved.

It should be understood that the contents described in this part are neither intended to identify key or important features of the embodiments of the present disclosure, nor used to limit the scope of the present disclosure. Other features of the present disclosure will become easier to understand through the following specification.

### BRIEF DESCRIPTION OF THE DRAWINGS

Accompanying drawings are used to better understand the solution, and do not constitute a limitation to the present disclosure. Wherein:
Fig. 1 is a schematic diagram of a complex causal relationship provided according to the present disclosure;
Fig. 2 is a schematic flow chart of a method for extracting causal relationship provided according to an embodiment of the present disclosure;
Fig. 3 is a schematic diagram of a second machine reading comprehension model provided according to an embodiment of the present disclosure;
Fig. 4 is a schematic structural diagram of an apparatus for extracting causal relationship provided according to an embodiment of the present disclosure; and
Fig. 5 is a schematic block diagram of an electronic device used to implement a method for extracting causal relationship of an embodiment of the present disclosure.

### DETAILED DESCRIPTION

The exemplary embodiments of the present disclosure are described below with reference to the accompanying drawings, which include various details of the embodiments of the present disclosure for the sake of better understanding and should be constructed as being only exemplary. Therefore, those ordinarily skilled in the art should realize that various changes and modifications can be made to the embodiments described herein without departing from the scope of the present disclosure. Similarly, for the sake of clarity and conciseness, description for known functions and structures is omitted in the following description.

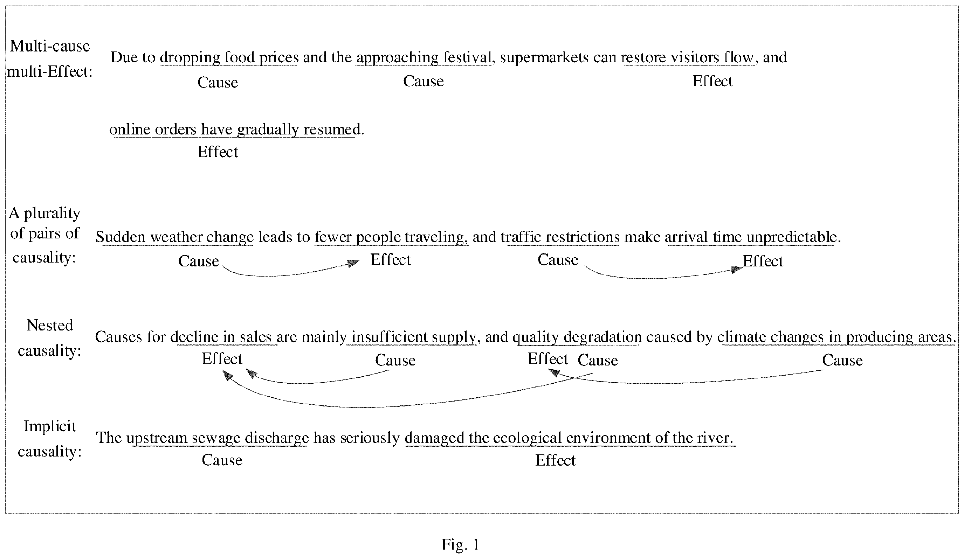

Inventors recognize that due to low accuracy of a causal relationship extraction method based on a rule template, with the development of deep learning, a causal relationship extraction method based on a deep learning model is gradually applied. This kind of method usually converts causal relationship extraction into sequence labeling questions, and uses the deep learning model to label causes and effects in a text. This method of using the deep learning model for sequence labeling can better solve the problem of low rule template coverage, but it is very difficult for the deep learning model of sequence labeling to solve extraction of complex causality. When there are cases of multiple pairs of causes and effects, multi-cause and multi-effect nested causality or implicit causality shown in Fig. 1 in the text, pairing of causes and effects cannot be performed, resulting in low accuracy.

Therefore, the embodiments of the present disclosure proposes a machine reading comprehension (MRC) based model. A multi-round multi-answer machine reading comprehension model is used to realize automatic extraction and pairing of complex causality, thus improving the accuracy of causal relationship extraction.

The present disclosure provides a method and an apparatus for extracting causal relationship, and an electronic device, which are applied to the fields of knowledge graphs and deep learning, which can improve the accuracy of causal relationship extraction.

The method for extracting causal relationship provided by the present disclosure will be described in detail through specific embodiments below. It can be understood that the following specific embodiments may be combined with each other, and same or similar concepts or processes may not be repeated in some embodiments.

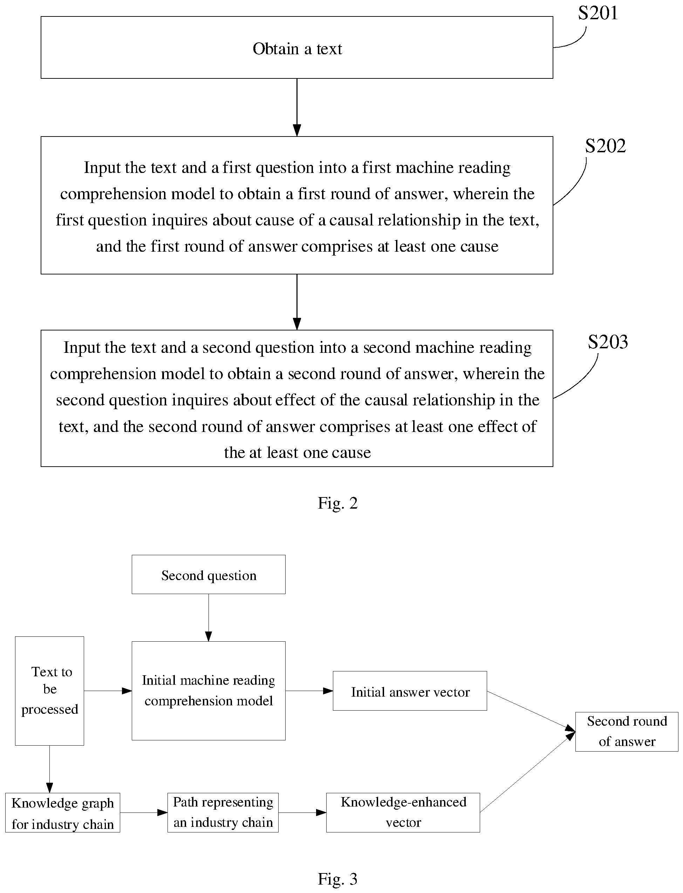

Fig. 2 is a schematic flow chart of a method for extracting causal relationship provided according to an embodiment of the present disclosure. An execution body of the method is a causal relationship extraction apparatus. The apparatus may be implemented through a hardware and/or software manner. As shown in Fig. 2, the method includes:
S201, obtain a text.

The text is a text with a causal relationship to be extracted. The causal relationship in the text may be a simple causal relationship, or may be a complex causal relationship. In some embodiments, the simple causal relationship refers to that the text includes a one-to-one causal relationship merely, and the complex causal relationship refers to that the text includes cases of a plurality of pairs of causes and effects, multiple causes and multiple effects, nested causality, and implicit causality. Implicit causality refers to a causal relationship that is not guided by a causal conjunction.

S202, input the text and a first question into a first machine reading comprehension model to obtain a first round of answer. The first question inquires about cause of a causal relationship in the text, and the first round of answer includes at least one cause in the text.

The first machine reading comprehension model in this step is used to obtain the corresponding first round of answer from the text according to the first question. When the first question is used to inquire about the causes in the text, the first round of answer output by the first machine reading comprehension model is the at least one cause in the text. For example, the first question is: what is a cause; and for another example, the first question is: what causes are included in the text. The embodiments of the present disclosure does not limit specific description forms of the first question, as long as it represents inquiring about the causes in the text.

As an illustrative example, the text is: *causes for decline in sales are mainly insufficient supply, and quality degradation caused by climate changes in producing areas.* The first question is: what are the causes; and the first round of answer is: *insufficient supply, climate change in producing areas and quality degradation.*

S203, input the text and a second question into a second machine reading comprehension model to obtain a second round of answer. The second question inquires about effect of the causal relationship in the text, and the second round of answer includes at least one effect of the at least one cause.

The second machine reading comprehension model is used to obtain the corresponding second round of answer from the text according to the second question. The second question is used to inquire about the effects of the at least one cause in the first round of answer, and correspondingly, the second round of answer is the effects of the at least one cause in the first round of answer.

It should be noted that, if the first round of answer includes a plurality of causes, it is needed to input the second question used to inquire about the effect of each cause respectively and the text into the second machine reading comprehension model to obtain the second round of answer corresponding to each cause, i.e., the effects corresponding to each cause.

In an illustrative example, the text is: *causes for decline in sales are mainly insufficient supply, and quality degradation caused by climate changes in producing areas.* The first question is: what are the causes; and the first round of answer is: *insufficient supply, climate change in producing areas and quality degradation.* In this step, the three causes in the first round of answer should be processed respectively. One second question is: what is the effect of *insufficient supply,* the second question and the text are input into the second machine reading comprehension model, and the obtained second round of answer is: *decline in sales.* Another second question is: what is the effect of *climate changes in producing areas,* the second question and the text are input into the second machine reading comprehension model, and the obtained second round of answer is: *quality degradation.* Further another second question is: what is the effect of *quality degradation,* the second question and the text are input into the second machine reading comprehension model, and the obtained second round of answer is: *decline in sales.*

In this way, through two rounds of processing in S202 and S203, the causes and effects included in the text and the corresponding relationship between the causes and the effects may be obtained, thus realizing accurate causal relationship extraction.

In some embodiments of the present disclosure, based on the machine reading comprehension models, the multi-answer first machine reading comprehension model in the first round is used to extract the causes in the text, and the multi-answer second machine reading comprehension model in the second round is used to extract an effect corresponding to each cause, so automatic extraction and pairing of complex causality is realized, and the accuracy of causal relationship extraction is improved.

In some embodiments, the second machine reading comprehension model may be a knowledge-enhanced machine reading comprehension model. Inputting the text and the second question into the second machine reading comprehension model to obtain the second round of answer in S203 includes:
the text and the second question are input into an initial machine reading comprehension model of the second machine reading comprehension model to obtain an initial answer vector; a keyword in the text is extracted through the second machine reading comprehension model; and the second round of answer is generated according to the initial answer vector and the keyword.

The second machine reading comprehension model may be a model obtained by introducing knowledge capabilities on the basis of the initial machine reading comprehension model. In addition to obtaining the initial answer vector according to the second question, the second machine reading comprehension model further extracts the keyword in the text, and generates the second round of answer jointly according to the initial answer vector and the keyword. Optionally, the keyword in the text is extracted through the second machine reading comprehension model; a knowledge-enhanced vector is generated according to the keyword; and the second round of answer is generated according to the initial answer vector and the knowledge-enhanced vector. Thus, the accuracy of the effects is improved, and the ability to extract implicit causality is improved.

In one application scenario, the method of the embodiments of the present disclosure is applied to the fields of finance and economy, the keyword of the text includes a keyword for industry, and the keyword for industry is information that can represent an industry that the text involves or to which the text belongs. For example, the keyword for industry may be an enterprise name, and an industry to which an enterprise belongs may be determined through the enterprise name; and the keyword for industry may be an industry name, such as petroleum industry and animal husbandry. Correspondingly, the keyword for industry in the text is extracted through the second machine reading comprehension model; a knowledge-enhanced vector is generated according to the keyword for industry, e.g., a path representing an industry chain containing the keyword for industry is obtained from a knowledge graph for industry chain according to the keyword for industry; the path representing the industry chain is encoded into the knowledge-enhanced vector; and the second round of answer is generated according to the initial answer vector and the knowledge-enhanced vector.

As an illustrative example, one keyword for industry included in the text is "XX Enterprise", a path representing an industry chain corresponding to "XX Enterprise" obtained by inquiring the knowledge graph for industry chain is <breeding and slaughtering, food processing, distribution/logistics, brand promotion>, and the path representing the industry chain is encoded to obtain the knowledge-enhanced vector.

Optionally, vector fusion is performed on the initial answer vector and the knowledge-enhanced vector to obtain a knowledge-enhanced answer vector; and the knowledge-enhanced answer vector is decoded to obtain the second round of answer. Performing vector fusion on the initial answer vector and the knowledge-enhanced vector may be performing vector fusion on the initial answer vector and the knowledge-enhanced vector using an attention mechanism. By using industry chain knowledge, the ability to extract implicit causality is improved.

In some embodiments, processing of the second machine reading comprehension model is as shown in Fig. 3. The text and the second question are input into the initial machine reading comprehension model to obtain the initial answer vector, the path representing an industry chain is obtained according to the text and the knowledge graph for industry chain, the knowledge-enhanced vector is generated, vector fusion is performed on the initial answer vector and the knowledge-enhanced vector using the attention mechanism, and the second round of answer is obtained through decoding.

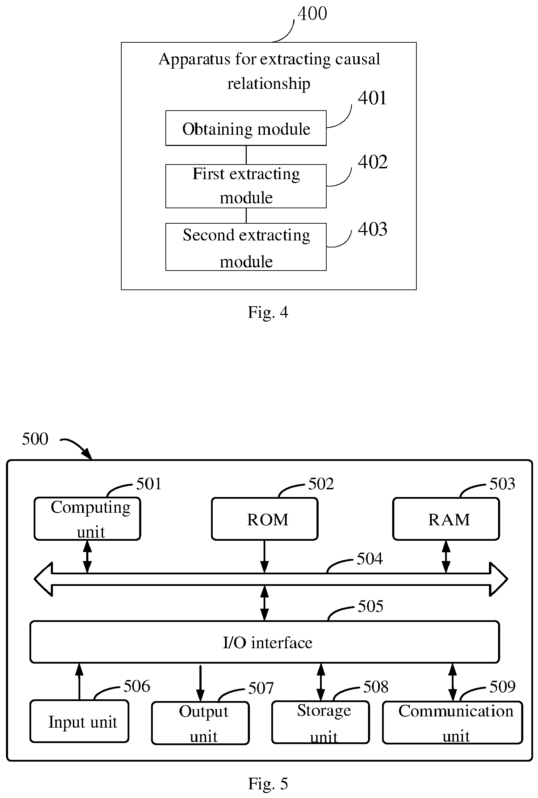

Fig. 4 is a schematic structural diagram of an apparatus for extracting causal relationship provided according to an embodiment of the present disclosure. As shown in Fig. 4, the causal relationship extraction apparatus 400 includes:
an obtaining module 401, configured to obtain a text;
a first extracting module 402, configured to input the text and a first question into a first machine reading comprehension model to obtain a first round of answer, where the first question inquires about cause of a causal relationship in the text, and the first round of answer includes at least one cause; and
a second extracting module 403, configured to input the text and a second question into a second machine reading comprehension model to obtain a second round of answer, where the second question inquires about effect of the causal relationship in the text, and the second round of answer includes at least one effect of the at least one cause.

In one implementation, the second extracting module 403 includes:
a processing unit, configured to input the text and the second question into an initial machine reading comprehension model of the second machine reading comprehension model to obtain an initial answer vector;
an extracting unit, configured to extract a keyword in the text through the second machine reading comprehension model; and
a generating unit, configured to generate the second round of answer according to the initial answer vector and the keyword.

In one implementation, the generating unit includes:
a first generating unit, configured to generate a knowledge-enhanced vector according to the keyword; and
a second generating unit, configured to generate the second round of answer according to the initial answer vector and the knowledge-enhanced vector.

In one implementation, the keyword includes a keyword for industry, and the first generating unit includes:
an obtaining sub-unit, configured to acquire a path representing an industry chain containing the keyword from a knowledge graph for industry chain according to the keyword; and
an encoding sub-unit, configured to encode the path into the knowledge-enhanced vector.

In one implementation, the second generating unit includes:
a fusing sub-unit, configured to perform vector fusion on the initial answer vector and the knowledge-enhanced vector to obtain a knowledge-enhanced answer vector; and
a decoding sub-unit, configured to decode the knowledge-enhanced answer vector to obtain the second round of answer.

In one implementation, the fusing sub-unit is configured to:
perform vector fusion on the initial answer vector and the knowledge-enhanced vector using an attention mechanism.

The apparatus of embodiments of the present disclosure may be used to execute the method for extracting causal relationship in the above method embodiment, the implementation principle and technical effects thereof are similar, and repetition will be omitted here.

According to embodiments of the present disclosure, the present disclosure further provides an electronic device, a readable storage medium, and a computer program product.

According to an embodiment of the present disclosure, the present disclosure further provides a computer program product. The computer program product includes: a computer program. The computer program is stored in a readable storage medium, at least one processor of an electronic device may read the computer program from the readable storage medium, and the at least one processor executes the computer program, such that the electronic device can execute the method provided by any one of the above embodiments.

Fig. 5 is a schematic block diagram of an electronic device used to implement a causal relationship extraction method of an embodiment of the present disclosure. The electronic device is intended to represent various forms of digital electronic computer devices, such as laptop computers, desktop computers, workstations, personal digital assistants, servers, blade servers, mainframe computers, and other suitable computers. The electronic device may also represent various forms of mobile apparatuses, such as personal digital assistants, cellular phones, smart phones, wearable devices, and other similar computing apparatuses. The components shown herein, their connections and relationships, and their functions serve as examples only, and are not intended to limit implementations of the disclosure described and/or claimed herein.

As shown in Fig. 5, the electronic device 500 includes a computing unit 501 which may execute various appropriate actions and processing according to a computer program stored in a read-only memory (ROM) 502 or a computer program loaded to a random access memory (RAM) 503 from a storage unit 508. In the RAM 503, various programs and data needed for operations of the electronic device 500 may be further stored. The computing unit 501, the ROM 502 and the RAM 503 are mutually connected through a bus 504. An input/output (I/O) interface 505 is also connected to the bus 504.

A plurality of components in the electronic device 500 are connected to the I/O interface 505, including: an input unit 506, such as a keyboard and a mouse; an output unit 507, such as various types of displays and speakers; the storage unit 508, such as a magnetic disk and a compact disc; and a communication unit 509, such as a network card, a modem and a wireless communication transceiver. The communication unit 509 allows the electronic device 500 to exchange information/data with other devices through a computer network, such as the Internet, and/or various telecommunication networks.

The computing unit 501 may be various general-purpose and/or special-purpose processing components with processing and computing capacity. Some examples of the computing unit 501 include but are not limited to a central processing unit (CPU), a graphics processing unit (GPU), various special-purpose artificial intelligence (AI) computing chips, various computing units for running a machine learning model algorithm, a digital signal processor (DSP), and any appropriate processor, controller, microcontroller and the like. The computing unit 501 executes each method and processing described above, for example, the causal relationship extraction method. For example, in some embodiments, the causal relationship extraction method may be realized as a computer software program, which is tangibly contained in a machine readable medium, for example, the storage unit 508. In some embodiments, a part of or all of the computer program may be loaded and/or installed onto the electronic device 500 via the ROM 502 and/or the communication unit 509. When the computer program is loaded to the RAM 503 and executed by the computing unit 501, one or more steps of the causal relationship extraction method described above can be executed. Alternatively, in other embodiments, the computing unit 501 may be configured to execute the causal relationship extraction method in any other appropriate modes (for example, by means of firmware).

Various implementations of the systems and technologies described above in this paper may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally away from each other and usually interact through a communication network. A relationship between the client and the server is generated by a computer program running on a computer program with a mutual client-server relation on a corresponding computer. The server may be a cloud server, also called a cloud computer server or a cloud host, and is a host product in a cloud computing service system to solve the defects of high management difficulty and weak business expansibility in a traditional physical host and virtual private server (VPS) services. The server may also be a server of a distributed system, or a server combined with a blockchain.

It should be understood that steps can be reranked, added or deleted by using various forms of flows shown above. For example, all the steps recorded in the present disclosure can be executed in parallel, or in sequence or in different orders, which is not limited herein as long as the desired result of the technical solutions disclosed by the present disclosure can be realized.

The above specific embodiments do not limit the protection scope of the present disclosure. It should be understood by those skilled in the art that various modifications, combinations, sub-combinations and substitutions may be performed depending on design requirements and other factors. Any modifications, equivalent replacements, and improvements made within the spirit and principles of the present disclosure should be included within the protection scope of the present disclosure.

## Claims

1. A computer-implemented method for extracting causal relationship, comprising:
obtaining (S201) a text;
inputting (S202) the text and a first question into a first machine reading comprehension model to obtain a first round of answer, wherein the first question inquires about cause of a causal relationship in the text, and the first round of answer comprises at least one cause; and
inputting (S203) the text and a second question into a second machine reading comprehension model to obtain a second round of answer, wherein the second question inquires about effect of the causal relationship in the text, and the second round of answer comprises at least one effect of the at least one cause.

2. The method according to claim 1, wherein the inputting the text and the second question into the second machine reading comprehension model to obtain the second round of answer comprises:
inputting the text and the second question into an initial machine reading comprehension model of the second machine reading comprehension model to obtain an initial answer vector;
extracting a keyword in the text through the second machine reading comprehension model; and
generating the second round of answer according to the initial answer vector and the keyword.

3. The method according to claim 2, wherein the generating the second round of answer comprises:
generating a knowledge-enhanced vector according to the keyword; and
generating the second round of answer according to the initial answer vector and the knowledge-enhanced vector.

4. The method according to claim 3, wherein the keyword comprises a keyword for industry, and the generating a knowledge-enhanced vector according to the keyword comprises:
obtaining a path representing an industry chain containing the keyword from a knowledge graph for industry chain according to the keyword; and
encoding the path into the knowledge-enhanced vector.

5. The method according to claim 3 or 4, wherein the generating the second round of answer comprises:
performing vector fusion on the initial answer vector and the knowledge-enhanced vector to obtain a knowledge-enhanced answer vector; and
decoding the knowledge-enhanced answer vector to obtain the second round of answer.

6. The method according to claim 5, wherein the performing vector fusion on the initial answer vector and the knowledge-enhanced vector comprises:
performing vector fusion on the initial answer vector and the knowledge-enhanced vector using an attention mechanism.

7. An apparatus for extracting causal relationship, comprising:
an obtaining module (401), configured to obtain a text;
a first extracting module (402), configured to input the text and a first question into a first machine reading comprehension model to obtain a first round of answer, wherein the first question inquires about cause of a causal relationship in the text, and the first round of answer comprises at least one cause; and
a second extracting module (403), configured to input the text and a second question into a second machine reading comprehension model to obtain a second round of answer, wherein the second question inquires about effect of the causal relationship in the text, and the second round of answer comprises at least one effect of the at least one cause.

8. The apparatus according to claim 7, wherein the second extracting module comprises:
a processing unit, configured to input the text and the second question into an initial machine reading comprehension model of the second machine reading comprehension model to obtain an initial answer vector;
an extracting unit, configured to extract a keyword in the text through the second machine reading comprehension model; and
a generating unit, configured to generate the second round of answer according to the initial answer vector and the keyword.

9. The apparatus according to claim 8, wherein the generating unit comprises:
a first generating unit, configured to generate a knowledge-enhanced vector according to the keyword; and
a second generating unit, configured to generate the second round of answer according to the initial answer vector and the knowledge-enhanced vector.

10. The apparatus according to claim 9, wherein the keyword comprises a keyword for industry, and the first generating unit comprises:
an obtaining sub-unit, configured to obtain a path representing an industry chain containing the keyword from a knowledge graph for industry chain according to the keyword; and
an encoding sub-unit, configured to encode the path into the knowledge-enhanced vector.

11. The apparatus according to claim 9 or 10, wherein the second generating unit comprises:
a fusing sub-unit, configured to perform vector fusion on the initial answer vector and the knowledge-enhanced vector to obtain a knowledge-enhanced answer vector; and
a decoding sub-unit, configured to decode the knowledge-enhanced answer vector to obtain the second round of answer.

12. The apparatus according to claim 11, wherein the fusing sub-unit is configured to:
perform vector fusion on the initial answer vector and the knowledge-enhanced vector using an attention mechanism.

13. An electronic device, comprising:
at least one processor; and
a memory communicatively connected to the at least one processor, wherein
the memory stores instructions executable by the at least one processor, wherein the instructions, when executed by the at least one processor, are configured to cause the at least one processor to implement the method according to any one of claims 1-6.

14. A non-transitory computer-readable storage medium storing computer instructions, wherein the computer instructions are configured to enable a computer to implement the method according to any one of claims 1-6.

15. A computer program product, comprising a computer program, wherein the computer program, when being executed by a processor, implements steps of the method according to any one of claims 1-6.
